# EUROPEAN PATENT APPLICATION

(11) **EP 4 236 397 A1**
(43) Date of publication of application: **30.08.2023**
(21) Application number: 20963089.6
(22) Date of filing: 30.11.2020
(51) Int. Cl.: H04W 4/44

(54) **AUTOMOBILE ELECTRONIC IDENTIFICATION TRANSMISSION METHOD, ON-BOARD DEVICE, AND READER-WRITER**

(71) Applicant: Huawei Technologies Co., Ltd., Shenzhen, Guangdong 518129 (CN)
(72) Inventor: PAN, Kai, Shenzhen, Guangdong 518129 (CN); CHEN, Jing, Shenzhen, Guangdong 518129 (CN)
(74) Representative: Huawei European IPR
(86) International application number: PCT/CN2020/132914
(87) International publication number: WO 2022/110201

(57) **Abstract**

Embodiments of this application provide a method for transmitting an electronic registration identification of a motor vehicle, a vehicle-mounted device, and a reader/writer. In the method, the vehicle-mounted device receives a read request message from the reader/writer, where the read request message is used to request to read an electronic registration identification of a motor vehicle that is stored in the vehicle-mounted device. After receiving the read request message, the vehicle-mounted device performs verification on the reader/writer by using the read request message, and after determining that the verification succeeds, performs encryption processing on the electronic registration identification of the motor vehicle. Then, the vehicle-mounted device sends a read response message to the reader/writer, where the read response message includes the encrypted electronic registration identification of the motor vehicle. In this solution, verification is performed on the reader/writer by using a computing capability of the vehicle-mounted device that is better than that of an existing electronic label, and after it is determined that the reader/writer has a permission to read the electronic registration identification of the motor vehicle that is stored in the vehicle-mounted device, the electronic registration identification of the motor vehicle is encrypted and sent to the reader/writer by using the read response message. Compared with an existing manner, this solution reduces a quantity of rounds of information exchange, reduces overheads, and improves security of transmission of the electronic registration identification of the motor vehicle.

## Description

### TECHNICAL FIELD

This application relates to the field of internet of vehicles technologies, and in particular, to a method for transmitting an electronic registration identification of a motor vehicle, a vehicle-mounted device, and a reader/writer.

### BACKGROUND

An electronic registration identification of a motor vehicle (electronic registration identification of the motor vehicle, ERI) is an extension of internet of things passive radio frequency identification (Radio Frequency Identification, RFID) in the smart transportation field. The ERI may be specifically vehicle information such as a license plate number stored in an electronic label. The electronic label is a chip that can be attached to a vehicle. The electronic label may also be referred to as an electronic identity card of the motor vehicle or a digital standard signal source of the motor vehicle, and is generally referred to as an "electronic license plate". A reader/writer disposed in another traffic infrastructure interacts with the electronic label to obtain the electronic registration identification of the motor vehicle that is stored in the electronic label, to implement automatic, non-contact, and non-stop vehicle identification and monitoring.

When a vehicle on which the electronic label is mounted passes a checkpoint, an important intersection, or a place in which a roadside unit is installed, a reader/writer in these places transmits an ultra-high-frequency electromagnetic wave to the electronic label. The electronic label converts the received ultra-high-frequency electromagnetic wave into electric energy and starts a chip to work. After performing verification on information such as an identity of the reader/writer, the chip sends information to the reader/writer. Then, the reader/writer sends the information back to a command center.

In actual use, before returning the information by the reader/writer to the reader/writer, the electronic label needs to perform authentication, and after the authentication succeeds, establishes a secure channel to the reader/writer. Specifically, the reader/writer requests a random number from the electronic label, and performs a cryptographic operation on the obtained random number and a read password for the electronic label to obtain access command enabling permission information; the reader/writer sends the access command enabling permission information to the electronic label; and the electronic label performs a cryptographic operation on the received access command enabling permission information based on the read password for the reader/writer, and if the random number can be obtained, determines that the reader/writer has a permission to read the vehicle information stored in the electronic label, and the electronic label can accept the read command of the reader/writer. It can be learned that, before reading the vehicle information stored in the electronic label, the reader/writer needs to perform a plurality of rounds of interaction to establish a secure channel. Consequently, an excessively large quantity of messages are exchanged, and overheads are relatively high.

### SUMMARY

This application provides a method for transmitting an electronic registration identification of a motor vehicle, a vehicle-mounted device, and a reader/writer, to improve security of transmission of the electronic registration identification of the motor vehicle, reduce a quantity of rounds of information exchange, and reduce overheads.

According to a first aspect, an embodiment of this application provides a method for transmitting an electronic registration identification of a motor vehicle. A vehicle-mounted device receives a read request message from a reader/writer, where the read request message is used to request to read an electronic registration identification of a motor vehicle that is stored in the vehicle-mounted device. After receiving the read request message, the vehicle-mounted device performs verification on the reader/writer by using the read request message, and after determining that the verification succeeds, performs encryption processing on the electronic registration identification of the motor vehicle. Then, the vehicle-mounted device sends a read response message to the reader/writer, where the read response message includes the encrypted electronic registration identification of the motor vehicle.

In the foregoing method, the electronic registration identification of the motor vehicle is stored in the vehicle-mounted device, and the reader/writer is verified by using a computing capability of the vehicle-mounted device that is better than that of an existing electronic label, and after it is determined that the reader/writer has the permission to read the electronic registration identification of the motor vehicle that is stored in the vehicle-mounted device, the electronic registration identification of the motor vehicle is encrypted and sent to the reader/writer by using the read response message. Compared with an existing manner of establishing a secure channel between the electronic label and the reader/writer, this reduces a quantity of rounds of information exchange, reduces overheads, and improves security of transmission of the electronic registration identification of the motor vehicle.

In a possible design, the vehicle-mounted device may perform encryption processing on the electronic registration identification of the motor vehicle in the following manner: The vehicle-mounted device performs first encryption processing on the electronic registration identification of the motor vehicle based on a read password corresponding to a unique identity UID of the electronic registration identification of the motor vehicle, to obtain first encrypted information; the vehicle-mounted device determines verification information, where the verification information includes the UID; and the vehicle-mounted device performs second encryption processing on the first encrypted information and the verification information by using a public key of the reader/writer.

In this design, the vehicle-mounted device first performs first encryption processing on the electronic registration identification of the motor vehicle based on the read password corresponding to the UID of the electronic registration identification of the motor vehicle, to obtain the first encrypted information, and then performs second encryption processing on the first encrypted information and the verification information by using the public key of the reader/writer. After two times of encryption processing, security of a process of transmitting the electronic registration identification of the motor vehicle is improved.

In a possible design, the read request message includes at least one of first location information or first time information, a first location indicated by the first location information is a location at which the reader/writer sends the read request message, and first time indicated by the first time information is time at which the reader/writer sends the read request message.

That the vehicle-mounted device performs verification on the reader/writer by using the read request message includes: The vehicle-mounted device determines that a distance between the first location indicated by the first location information and a location at which the vehicle-mounted device receives the read request message is less than a first distance threshold; or the vehicle-mounted device determines that a time difference between the first time indicated by the first time information and time at which the vehicle-mounted device receives the read request message is less than a first time threshold.

In this design, the read request message may further carry at least one of the first location information or the first time information. The vehicle-mounted device may determine, by determining the location and the time at which the vehicle-mounted device receives the read request message, a distance between the vehicle-mounted device and the reader/writer and time at which the read request message is transmitted, to determine whether the reader/writer is within a range of having a permission to read the electronic registration identification of the motor vehicle, so that a case of maliciously obtaining the electronic registration identification of the motor vehicle is prevented.

In a possible design, the verification information further includes at least one of the first location information or the first time information.

In this design, the verification information includes at least one of the first location information or the first time information, so that after obtaining the verification information through decryption, the reader/writer can determine, based on the first location information or the first time information, whether the received read response message corresponds to the read request message sent by the reader/writer, to prevent a case of maliciously obtaining the electronic registration identification of the motor vehicle.

In a possible design, the verification information further includes at least one of second location information or second time information, a second location indicated by the second location information is a location at which the vehicle-mounted device performs encryption processing on the electronic registration identification of the motor vehicle, and second time indicated by the second time information is time at which the vehicle-mounted device performs encryption processing on the electronic registration identification of the motor vehicle.

In this design, the verification information includes at least one of the second location information or the second time information, so that after obtaining the verification information through decryption, the reader/writer can determine, based on the second location information or the second time information, whether the reader/writer is within a range of having a permission to read the electronic registration identification of the motor vehicle, to improve security of transmitting the electronic registration identification of the motor vehicle.

In a possible design, the verification information further includes a pseudonym certificate identifier of the vehicle-mounted device.

In this design, the pseudonym certificate identifier of the vehicle-mounted device is used as a part of the verification information, so that the pseudonym certificate identifier used by the vehicle-mounted device can be bound to the first encrypted information, to prevent a case in which benefits of a victim are damaged because a man-in-the-middle maliciously obtains the first encrypted information from the read response message and replays the first encrypted information by using a pseudonym certificate of the man-in-the-middle. For example, the man-in-the-middle is prevented from pretending to be the victim to perform a traffic violation or paying a road fee by using information about the victim, and security is further improved.

In a possible design, the read response message is a message obtained after signature processing is performed based on a pseudonym certificate of the vehicle-mounted device.

In this design, the vehicle-mounted device performs signature processing on the read response message by using the pseudonym certificate of the vehicle-mounted device, to prevent the man-in-the-middle from maliciously obtaining the electronic registration identification of the motor vehicle.

In a possible design, the vehicle-mounted device performs verification on the reader/writer by using the read request message in the following manner:

The vehicle-mounted device determines an upper-level certificate public key of an application certificate corresponding to a signature of the read request message, and performs decryption processing on the application certificate by using the upper-level certificate public key, to obtain a first digest. The vehicle-mounted device calculates a second digest based on content of the application certificate, and determines, through comparison, whether the first digest is the same as the second digest. The vehicle-mounted device determines an upper-level public key of the signature of the read request message, and performs decryption processing on the signature by using the upper-level public key to obtain a third digest. The vehicle-mounted device calculates a fourth digest based on content of the signature, and determines, through comparison, whether the third digest is the same as the fourth digest.

The vehicle-mounted device determines, in the following manner, that the verification on the reader/writer succeeds: The vehicle-mounted device determines that the first digest is the same as the second digest, and the vehicle-mounted device determines that the third digest is the same as the fourth digest.

In this design, after receiving the read request message, the vehicle-mounted device first verifies that the application certificate corresponding to the signature of the read request message is valid, and then determines that the signature of the read request message is correct, to determine that the verification on the reader/writer succeeds. Compared with an existing motor vehicle identifier transmission method, a process of performing verification on the reader/writer is completed in one round of information exchange for transmitting the read request message and the read response message, a quantity of rounds of information exchange is reduced, and efficiency is improved.

According to a second aspect, an embodiment of this application provides a method for transmitting an electronic registration identification of a motor vehicle. A reader/writer sends a read request message to a vehicle-mounted device, where the read request message is used to request to read an electronic registration identification of a motor vehicle that is stored in the vehicle-mounted device, and the read request message includes information used by the vehicle-mounted device to perform verification on the reader/writer; then, the reader/writer receives a read response message sent by the vehicle-mounted device, where the read response message includes an encrypted electronic registration identification of a motor vehicle; and the reader/writer performs verification on the vehicle-mounted device by using the read response message, and after determining that the verification succeeds, performs decryption processing on the encrypted electronic registration identification of the motor vehicle to obtain the electronic registration identification of the motor vehicle.

In the foregoing method, after sending the read request message to the vehicle-mounted device, the reader/writer receives the read response message sent by the vehicle-mounted device, where the read response message includes the encrypted electronic registration identification of the motor vehicle. After the verification on the vehicle-mounted device succeeds, the reader/writer obtains the electronic registration identification of the motor vehicle through decryption. To be specific, in one information exchange process, the reader/writer completes steps of performing verification on the vehicle-mounted device and obtaining the electronic registration identification of the motor vehicle, so that a quantity of rounds of information exchange is reduced, and overheads are reduced.

In a possible design, the reader/writer performs decryption processing on the encrypted electronic registration identification of the motor vehicle in the following manner, to obtain the electronic registration identification of the motor vehicle: The reader/writer performs first decryption processing on the encrypted electronic registration identification of the motor vehicle by using a private key of the reader/writer to obtain first encrypted information and verification information, where the verification information includes a unique identity UID of the electronic registration identification of the motor vehicle; and the reader/writer performs second decryption processing on the first encrypted information based on a read password corresponding to the UID, to obtain the electronic registration identification of the motor vehicle.

In this design, the reader/writer first performs first decryption processing on the encrypted electronic registration identification of the motor vehicle by using the private key of the reader/writer, and then performs second decryption processing by using the read password corresponding to the UID to obtain the electronic registration identification of the motor vehicle, so that it is ensured that the electronic registration identification of the motor vehicle can be decrypted only by a reader/writer with a permission, to prevent a man-in-the-middle from maliciously obtaining the electronic registration identification of the motor vehicle.

In a possible design, the read request message includes at least one of first location information or first time information, a first location indicated by the first location information is a location at which the reader/writer sends the read request message, and first time indicated by the first time information is time at which the reader/writer sends the read request message.

In this design, the read request message includes at least one of the first location information or the first time information, so that the vehicle-mounted device learns the location and the time at which the reader/writer sends the read request message, and determines whether the reader/writer is within a range of having a permission to read the electronic registration identification of the motor vehicle, to prevent a case of maliciously obtaining the electronic registration identification of the motor vehicle.

In a possible design, the verification information further includes at least one of second location information or second time information; and before the reader/writer performs second decryption processing on the first encrypted information based on the read password corresponding to the UID, the reader/writer determines that a distance between a second location indicated by the second location information and the first location indicated by the first location information is less than a second distance threshold, or the reader/writer determines that a time difference between second time indicated by the second time information and the first time indicated by the first time information is less than a second time threshold.

In this design, when the verification information further includes at least one of the second location information or the second time information, the reader/writer performs verification on the location information and the time information, and determines that the electronic registration identification of the motor vehicle that is received by the reader/writer is the electronic registration identification of the motor vehicle that is obtained by the reader/writer by sending the read request message, to further prevent a case in which benefits of a victim are damaged because another man-in-the-middle maliciously obtains the electronic registration identification of the motor vehicle and replays the electronic registration identification of the motor vehicle in a remote place.

In a possible design, the verification information further includes at least one of second location information or second time information.

Before the reader/writer performs second decryption processing on the first encrypted information based on the read password corresponding to the UID, the reader/writer determines that a distance between a second location indicated by the second location information and a location at which the reader/writer performs the first decryption is less than a first distance threshold, or the reader/writer determines that a time difference between second time indicated by the second time information and the first time is less than a first time threshold.

In this design, the verification information further includes the second location information or the second time information. The reader/writer determines, based on the second location and the second time, that when the reader/writer receives the read response message, the reader/writer is within a range of having a permission to read the electronic registration identification of the motor vehicle, to prevent a man-in-the-middle from maliciously obtaining the electronic registration identification of the motor vehicle and replaying the electronic registration identification of the motor vehicle in a remote place.

In a possible design, the verification information further includes a pseudonym certificate identifier; and before the reader/writer performs second decryption processing on the first encrypted information based on the read password corresponding to the UID, the reader/writer determines that the pseudonym certificate identifier included in the verification information is the same as a pseudonym certificate identifier corresponding to a signature of the read response message.

In this design, the reader/writer can perform, only after determining that the pseudonym certificate identifier included in the verification information is the same as the pseudonym certificate identifier corresponding to the signature of the read response message, second decryption processing on the first encrypted information to obtain the electronic registration identification of the motor vehicle, to prevent a case in which benefits of a victim are damaged because a man-in-the-middle maliciously obtains the first encrypted information from the read response message and replays the first encrypted information by using a pseudonym certificate of the man-in-the-middle. For example, the man-in-the-middle is prevented from pretending to be the victim to perform a traffic violation or paying a road fee by using information about the victim.

In a possible design, the read request message is a message obtained after signature processing is performed based on an application certificate of the reader/writer.

In this design, the reader/writer performs signature processing on the read request message by using the application certificate of the reader/writer, so that security of a process of transmitting the electronic registration identification of the motor vehicle is improved.

In a possible design, the reader/writer may perform verification on the vehicle-mounted device in the following manner: The reader/writer determines an upper-level certificate public key of a pseudonym certificate corresponding to the signature of the read response message, and performs decryption processing on the pseudonym certificate by using the upper-level certificate public key, to obtain a fifth digest; and the reader/writer calculates a sixth digest based on content of the pseudonym certificate, and determines, through comparison, whether the fifth digest is the same as the sixth digest; and the reader/writer determines an upper-level public key of the signature of the read response message, and performs decryption processing on the signature by using the upper-level public key to obtain a seventh digest, and the reader/writer calculates an eighth digest based on content of the signature, and determines, through comparison, whether the seventh digest is the same as the eighth digest.

The reader/writer may determine, in the following manner, that the verification on the vehicle-mounted device succeeds: The reader/writer determines that the fifth digest is the same as the sixth digest, and the reader/writer determines that the seventh digest is the same as the eighth digest.

In this design, after receiving the read response message, the reader/writer first verifies that a pseudonymous application certificate corresponding to the signature of the read response message is valid, and then determines that the signature of the read response message is correct, to determine that the verification on the vehicle-mounted device succeeds. Compared with an existing motor vehicle identifier transmission method, a process of performing verification on the vehicle-mounted device is completed in one round of information exchange for transmitting the read request message and the read response message, a quantity of rounds of information exchange is reduced, and efficiency is improved.

According to a third aspect, an embodiment of this application provides a communication apparatus, including units configured to perform the steps in either of the foregoing aspects.

According to a fourth aspect, an embodiment of this application provides a vehicle-mounted device, including at least one processing element and at least one storage element. The at least one storage element is configured to store a program and data, and the at least one processing element is configured to perform the method provided in the first aspect of this application.

According to a fifth aspect, an embodiment of this application provides a reader/writer, including at least one processing element and at least one storage element. The at least one storage element is configured to store a program and data, and the at least one processing element is configured to perform the method provided in the second aspect of this application.

According to a sixth aspect, an embodiment of this application provides a communication system, including a vehicle-mounted device and a reader/writer. The vehicle-mounted device has a function of performing the method provided in the first aspect of this application, and the reader/writer has a function of performing the method provided in the second aspect of this application.

According to a seventh aspect, an embodiment of this application further provides a computer program. When the computer program is run on a computer, the computer is enabled to perform the method provided in any one of the foregoing aspects.

According to an eighth aspect, an embodiment of this application further provides a computer-readable storage medium. The computer-readable storage medium stores a computer program, and when the computer program is executed by a computer, the computer is enabled to perform the method provided in any one of the foregoing aspects.

According to a ninth aspect, an embodiment of this application further provides a chip, and the chip is configured to read a computer program stored in a memory, to perform the method provided in any one of the foregoing aspects.

According to a tenth aspect, an embodiment of this application further provides a chip system. The chip system includes a processor, configured to support a computer apparatus in implementing the method provided in any one of the foregoing aspects. In a possible design, the chip system further includes a memory. The memory is configured to store a program and data that are used for the computer apparatus. The chip system may include a chip, or may include a chip and another discrete component.

### BRIEF DESCRIPTION OF DRAWINGS

FIG. 1 is a schematic diagram of an internet of vehicles scenario;
FIG. 2 is a flowchart of a method for transmitting an electronic registration identification of a motor vehicle according to an embodiment of this application;
FIG. 3 is a flowchart of a first instance of transmission of an electronic registration identification of a motor vehicle according to an embodiment of this application;
FIG. 4 is a flowchart of a second instance of transmission of an electronic registration identification of a motor vehicle according to an embodiment of this application;
FIG. 5A and FIG. 5B are a flowchart of a third instance of transmission of an electronic registration identification of a motor vehicle according to an embodiment of this application;
FIG. 6A and FIG. 6B are a flowchart of a fourth instance of transmission of an electronic registration identification of a motor vehicle according to an embodiment of this application;
FIG. 7 is a schematic diagram of a structure of a communication apparatus according to an embodiment of this application;
FIG. 8 is a schematic diagram of a structure of a vehicle-mounted device according to an embodiment of this application; and
FIG. 9 is a schematic diagram of a structure of a reader/writer according to an embodiment of this application.

### DESCRIPTION OF EMBODIMENTS

To facilitate understanding of embodiments of this application, the following describes terms related to embodiments of this application.
(1) A radio frequency identification (Radio Frequency Identification, RFID) technology is an automatic identification technology that can perform non-contact bidirectional data communication in a wireless radio frequency manner. For example, a reader/writer reads and writes, in the wireless radio frequency manner, data stored in an electronic label, to identify a target and exchange data.

The electronic label and the reader/writer are coupled without contact with each other by using a coupling element. In a coupling channel, energy is transferred and data is exchanged in a time sequence.

The electronic label is also referred to as a radio frequency label, a transponder, or a data carrier, and includes the coupling element and a chip. Each electronic label has a unique electronic code, and a high-capacity electronic label has storage space into which data can be written. The electronic label is attached to an object to identify a target object. The electronic label memory has a unique identity (Unique Identity document, UID) of the electronic label and information about the target object identified by the electronic label. For example, when the electronic label is attached to a vehicle, the information about the target object identified by the electronic label is an electronic registration identification of a motor vehicle, includes vehicle information of the vehicle, and may be specifically vehicle license plate information, vehicle license information, or the like.

The reader/writer is also referred to as a reader, a scanner, or a communicator, and is a device for performing a reading or writing operation on the electronic label, and may be designed as a handheld or fixed type. For example, the reader/writer may be mounted at a checkpoint, an important intersection, or a roadside unit, and obtains vehicle information of a passing vehicle by interacting with an electronic label attached to the passing vehicle.

(2) A public key and a private key are a key pair in an encryption algorithm. The public key is open to the outside for encryption, and the private key is reserved locally for decryption.

(3) A vehicle-mounted device is a device that is placed or mounted on a vehicle for information processing and information exchange. In embodiments of this application, the vehicle-mounted device is a device with a communication capability. For example, a vehicle-mounted device is a vehicle-mounted telematics box (Telematics Box, T-Box), and is generally mounted on a vehicle. A roadside unit (road side unit, RSU) is disposed on a roadside, and the reader/writer is mounted in the RSU. The T-box may communicate with the reader/writer. For example, the T-box establishes a microwave communication link to the reader/writer by using a dedicated short-range communication (dedicated short range communications, DSRC) technology, and implements a process such as vehicle identity identification without stopping in a traveling process.

It should be noted that "a plurality of" in this application refers to two or more. In addition, "at least one" means one or more.

In addition, it should be understood that in the descriptions of this application, terms such as "first" and "second" are merely used for distinguishing and description, but should not be understood as indicating or implying relative importance, or should not be understood as indicating or implying a sequence.

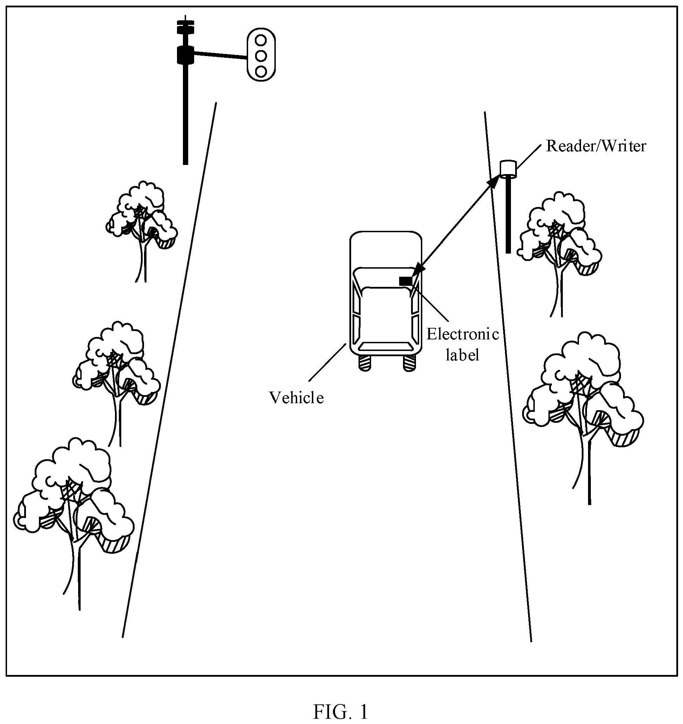

Technical solutions provided in embodiments of this application may be applied to an internet of vehicles scenario shown in FIG. 1. Each vehicle is attached with a corresponding electronic label, and the electronic label stores a UID of the electronic label and an electronic registration identification of a motor vehicle corresponding to each vehicle. The internet of vehicles scenario shown in FIG. 1 includes a vehicle on which an electronic label is mounted and a reader/writer.

When the vehicle moves into a detection range of the reader/writer, the reader/writer sends a read request message to the electronic label mounted on the vehicle. The electronic label performs authentication on the reader/writer, and the authentication may be specifically unidirectional authentication or bidirectional authentication. After the authentication performed by the electronic label on the reader/writer succeeds, the electronic label generates a random number, and sends the random number to the reader/writer. The reader/writer determines a read password corresponding to the electronic label, and performs a cryptographic operation on the read password and the random number to obtain access command enabling permission information, and the reader/writer sends the access command enabling permission information to the electronic label.

The electronic label determines a read password corresponding to the reader/writer, and performs decryption processing on the access command enabling permission information to obtain a random number. If it is determined that the random number obtained through decryption is the same as the random number sent by the electronic label to the reader/writer, the electronic label establishes a secure channel to the reader/writer, to indicate that the reader/writer has a permission to read or write an electronic registration identification of a motor vehicle that is stored in the electronic label, and the electronic label sends, to the reader/writer, the electronic registration identification of the motor vehicle that the reader/writer wants to read.

It can be learned from the foregoing content that, before reading the electronic registration identification of the motor vehicle that is stored in the electronic label, the reader/writer needs to perform a plurality of rounds of information exchange with the electronic label, and overheads are relatively high.

Based on the foregoing problem, an embodiment of this application provides a method for transmitting an electronic registration identification of a motor vehicle. An electronic label is integrated into a vehicle-mounted device. Specifically, the electronic label may be integrated into the vehicle-mounted device as a virtual module. The vehicle-mounted device is a device that is mounted on a vehicle and that is configured to perform information processing and information exchange, for example, may be a vehicle-mounted telematics box (Telematics Box, T-Box).

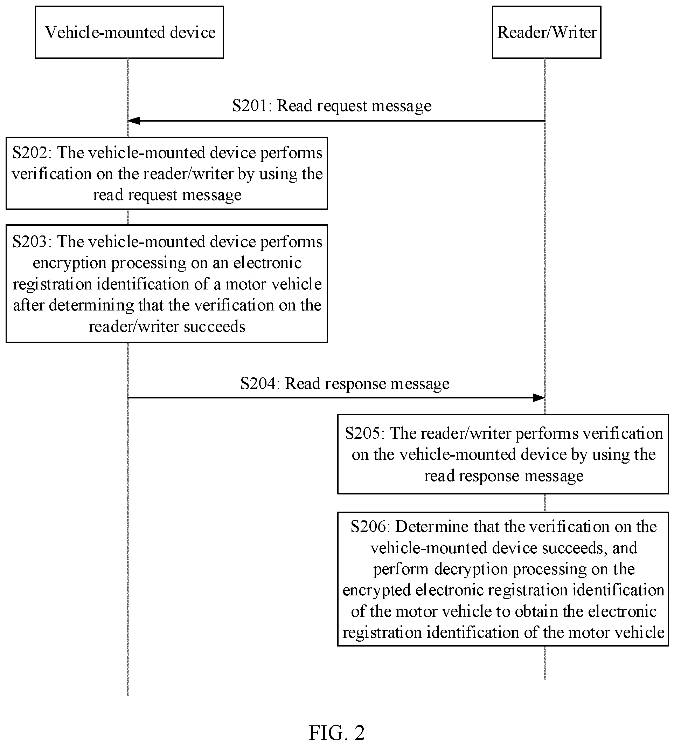

FIG. 2 shows a method for transmitting an electronic registration identification of a motor vehicle according to an embodiment of this application. The method includes the following steps.

S201: A reader/writer sends a read request message to a vehicle-mounted device, where the read request message is used to request to read an electronic registration identification of a motor vehicle that is stored in the vehicle-mounted device.

In an optional implementation, when detecting that the vehicle-mounted device enters a detection range of the reader/writer, the reader/writer sends the read request message to the vehicle-mounted device; or the reader/writer periodically broadcasts the read request message.

Optionally, the reader/writer may interact with the vehicle-mounted device by using a short-range direct communication interface. For example, the reader/writer may establish a sidelink connection to the vehicle-mounted device, and send the read request message to the vehicle-mounted device through a PC5 interface.

Optionally, the read request message may include a reader/writer identifier that is used to indicate an identity of the reader/writer. In addition, the read request message may further include at least one of first location information or first time information, a first location indicated by the first location information is a location at which the reader/writer sends the read request message, and first time indicated by the first time information is time at which the reader/writer sends the read request message. In this design, the reader/writer may send, to the vehicle-mounted device by using the read request message, the location information and the time information of the reader/writer when the reader/writer sends the read request message, so that the vehicle-mounted device obtains more information about the reader/writer, to determine whether the reader/writer has a permission to read the electronic registration identification of the motor vehicle. In this way, security is further improved.

In a possible implementation, before the reader/writer sends the read request message to the vehicle-mounted device, the reader/writer may perform signature processing on an initial read request message by using an application certificate of the reader/writer to obtain the read request message, to ensure that the read request message is not tampered with by an attacker, and improve security of data transmission.

S202: The vehicle-mounted device performs verification on the reader/writer by using the read request message.

In a possible implementation, the vehicle-mounted device performs the following verification on the reader/writer:
(1) The vehicle-mounted device verifies whether the reader/writer is valid.

When the read request message received by the vehicle-mounted device includes a reader/writer identifier, the vehicle-mounted device may search a locally stored identifier set of valid reader/writers that are allowed to read the electronic registration identification of the motor vehicle for the reader/writer identifier in the read request message. If the identifier set of valid reader/writers includes the reader/writer identifier in the read request message, the verification performed by the vehicle-mounted device on the reader/writer succeeds; or otherwise, the verification performed by the vehicle-mounted device on the reader/writer fails.

Because there may be a relatively large quantity of valid reader/writers that are allowed to read the electronic registration identification of the motor vehicle, a server may further store an identifier set of valid reader/writers corresponding to the vehicle-mounted device. The vehicle-mounted device may send the reader/writer identifier in the read request message to the server. The server searches the identifier set of valid reader/writers corresponding to the vehicle-mounted device for the reader/writer identifier sent by the vehicle-mounted device. If the identifier set of valid reader/writers includes the reader/writer identifier sent by the vehicle-mounted device, the server sends a notification message indicating that the reader/writer is valid to the vehicle-mounted device, and the verification performed by the vehicle-mounted device on the reader/writer succeeds; or otherwise, the server sends a notification message indicating that the reader/writer is invalid to the vehicle-mounted device, and the verification performed by the vehicle-mounted device on the reader/writer fails.

(2) The vehicle-mounted device verifies whether an application certificate used by the reader/writer is valid.

It can be learned from the foregoing descriptions of the read request message that, when the reader/writer performs signature processing on the initial read request message to obtain the read request message, the application certificate used by the reader/writer is an application certificate corresponding to a signature of the read request message. Therefore, in a verification process, the vehicle-mounted device may verify whether the application certificate corresponding to the signature of the read request message is valid, and this may specifically include the following steps:

The vehicle-mounted device determines an upper-level certificate public key of the application certificate corresponding to the signature of the read request message, and performs decryption processing on the application certificate by using the upper-level certificate public key, to obtain a first digest.

The vehicle-mounted device calculates a second digest based on content of the application certificate.

The vehicle-mounted device determines, through comparison, whether the first digest is the same as the second digest; and if the first digest is the same as the second digest, the vehicle-mounted device determines that the application certificate corresponding to the signature of the read request message is valid, and the verification performed by the vehicle-mounted device on the reader/writer succeeds; or otherwise, the vehicle-mounted device determines that the application certificate corresponding to the signature of the read request message is invalid, and the verification performed by the vehicle-mounted device on the reader/writer succeeds fails.

(3) The vehicle-mounted device verifies whether the signature of the read request message is correct.

Specifically, the following steps may be included.

The vehicle-mounted device determines an upper-level public key of the signature of the read request message, and performs decryption processing on the signature of the read request message by using the upper-level public key to obtain a third digest.

The vehicle-mounted device calculates a fourth digest based on content of the signature.

The vehicle-mounted device determines, through comparison, whether the third digest is the same as the fourth digest; and if the third digest is the same as the fourth digest, the vehicle-mounted device determines that the signature of the read request message is correct, and the verification performed by the vehicle-mounted device on the reader/writer succeeds; or otherwise, the vehicle-mounted device determines that the signature of the read request message is incorrect, and the verification performed by the vehicle-mounted device on the reader/writer fails.

In an optional implementation, if the read request message includes at least one of the first location information or the first time information, the vehicle-mounted device further needs to perform the following verification when performing verification on the reader/writer:

The vehicle-mounted device determines that a distance between the first location indicated by the first location information and a location at which the vehicle-mounted device receives the read request message is less than a first distance threshold, and this indicates that a distance between a vehicle to which the vehicle-mounted device belongs and the reader/writer is less than the first distance threshold, that is, the distance between the vehicle-mounted device and the reader/writer is within a detection allowed range, and the reader/writer has a permission to read the electronic registration identification of the motor vehicle that is stored in the vehicle-mounted device; or
the vehicle-mounted device determines that a time difference between the first time indicated by the first time information and time at which the vehicle-mounted device receives the read request message is less than a first time threshold, and this indicates that a time difference between the time at which the vehicle-mounted device receives the read request message and time at which the reader/writer sends the read request message is less than the first time threshold, that is, the read request message received by the vehicle-mounted device is within a valid time range, and the reader/writer has a permission to read the electronic registration identification of the motor vehicle that is stored in the vehicle-mounted device.

In the foregoing design, the vehicle-mounted device can determine that the received read request message is a read request message sent within the valid time range by a reader/writer that is in the detection allowed range with the vehicle-mounted device. This can prevent a case in which vehicle information is leaked or benefits of a vehicle owner are damaged because a remote reader/writer maliciously obtains the electronic registration identification of the motor vehicle.

S203: The vehicle-mounted device performs encryption processing on the electronic registration identification of the motor vehicle after determining that the verification on the reader/writer succeeds.

In an optional implementation, the vehicle-mounted device performs encryption processing on the electronic registration identification of the motor vehicle in the following manner:

The vehicle-mounted device performs first encryption processing on the electronic registration identification of the motor vehicle based on a read password corresponding to a UID of the electronic registration identification of the motor vehicle, to obtain first encrypted information. Optionally, the first encryption processing may be a cryptographic operation, for example, an exclusive OR operation.

After obtaining the first encrypted information, the vehicle-mounted device determines verification information, and performs second encryption processing on the first encrypted information and the verification information. Specifically, the verification information includes the UID of the electronic registration identification of the motor vehicle.

In an optional implementation, the verification information may further include at least one of the following content:
(1) Pseudonym certificate identifier of the vehicle-mounted device.

The pseudonym certificate of the vehicle-mounted device is a certificate that can be used to temporarily identify an identity of the vehicle-mounted device during communication.

(2) At least one of the first location information or the first time information.

If the read request message received by the vehicle-mounted device includes at least one of the first location information or the first time information, the verification information may further include at least one of the first location information or the first time information.

(3) At least one of second location information or second time information.

A second location indicated by the second location information is a location at which the vehicle-mounted device performs encryption processing on the electronic registration identification of the motor vehicle, and second time indicated by the second time information is time at which the vehicle-mounted device performs encryption processing on the electronic registration identification of the motor vehicle. It may be understood that, after the vehicle-mounted device receives the read request message sent by the reader/writer, a time interval between steps such as the vehicle-mounted device performs verification on the reader/writer, performs encryption processing on the electronic registration identification of the motor vehicle, and sends a read response message to the reader/writer is relatively short. Therefore, the location and the time at which the vehicle-mounted device performs encryption processing on the electronic registration identification of the motor vehicle may be used as a location and time at which the vehicle-mounted device sends the read response message to the reader/writer. In this way, when obtaining at least one of the second location information or the second time information in the read response message, the reader/writer can determine whether the reader/writer is in a range allowed by the vehicle-mounted device to read the electronic registration identification of the motor vehicle, so that security of transmitting the electronic registration identification of the motor vehicle is further improved.

S204: The vehicle-mounted device sends the read response message to the reader/writer, where the read response message includes the encrypted electronic registration identification of the motor vehicle.

In an optional implementation, before sending the read response message to the reader/writer, the vehicle-mounted device performs signature processing on an initial read response message by using a pseudonym certificate of the vehicle-mounted device to obtain the read response message, to ensure that the read response message is not tampered with by an attacker, and improve security of data transmission.

S205: The reader/writer performs verification on the vehicle-mounted device by using the read response message.

In an optional implementation, the reader/writer performs the following verification on the vehicle-mounted device:
(1) The reader/writer verifies whether the pseudonym certificate of the vehicle-mounted device is valid.

In specific implementation, when the vehicle-mounted device performs signature processing on the initial read response message to obtain the read response message, the vehicle-mounted device performs signature processing on the initial read response message by using the pseudonym certificate of the vehicle-mounted device. Therefore, in a verification process, the reader/writer may verify whether a pseudonym certificate corresponding to a signature of the received read response message is valid, and this may specifically include the following steps:

The reader/writer determines an upper-level certificate public key of the pseudonym certificate corresponding to the signature of the read response message, and performs decryption processing on the pseudonym certificate by using the upper-level certificate public key, to obtain a fifth digest.

The reader/writer calculates a sixth digest based on content of the pseudonym certificate.

The reader/writer determines, through comparison, whether the fifth digest is the same as the sixth digest; and if the fifth digest is the same as the sixth digest, the reader/writer determines that the pseudonym certificate corresponding to the signature of the read response message is valid, and the verification performed by the reader/writer on the vehicle-mounted device succeeds; or otherwise, the reader/writer determines that the pseudonym certificate corresponding to the signature of the read response message is invalid, and the verification performed by the reader/writer on the vehicle-mounted device fails.

(2) The reader/writer verifies whether the signature of the read response message is correct.

Specifically, the following steps may be included.

The reader/writer determines an upper-level public key of the signature of the read response message, and performs decryption processing on the signature of the read response message by using the upper-level public key, to obtain a seventh digest.

The reader/writer calculates an eighth digest based on content of the signature of the read response message.

The reader/writer determines, through comparison, whether the seventh digest is the same as the eighth digest; and if the seventh digest is the same as the eighth digest, the reader/writer determines that the signature of the read response message is correct, and the verification performed by the reader/writer on the vehicle-mounted device succeeds; or otherwise, the reader/writer determines that the signature of the read response message is incorrect, and the verification performed by the reader/writer on the vehicle-mounted device fails.

S206: The reader/writer determines that the verification on the vehicle-mounted device succeeds, and performs decryption processing on the encrypted electronic registration identification of the motor vehicle to obtain the electronic registration identification of the motor vehicle.

In an optional implementation, the reader/writer performs first decryption processing on the encrypted electronic registration identification of the motor vehicle by using a private key of the reader/writer, to obtain the first encrypted information and the verification information. Based on different content included in the verification information, processing performed by the reader/writer after obtaining the first encrypted information and the verification information is different. Details are as follows:
(1) If the verification information includes the UID of the electronic registration identification of the motor vehicle, the reader/writer determines, based on the UID of the electronic registration identification of the motor vehicle, the read password corresponding to the UID, and performs second decryption processing on the first encrypted information based on the determined read password, to obtain the electronic registration identification of the motor vehicle.

Optionally, the second decryption processing may be a cryptographic operation, for example, an exclusive OR operation.

(2) The verification information includes the UID of the electronic registration identification of the motor vehicle and at least one of third location information or third time information.

In an optional implementation, the third location information in the verification information is location information in the read request message received by the vehicle-mounted device, and the third time information is time information in the read request message received by the vehicle-mounted device. For example, when read response message sent by the vehicle-mounted device is in response to the read request message sent by the reader/writer in S201, if the read request message includes at least one of the first location information or the first time information, the third location information is the same as the first location information, and the third time information is the same as the first time information. Therefore, to determine that the electronic registration identification of the motor vehicle that is received by the reader/writer is the electronic registration identification of the motor vehicle that is requested by the read request message sent by the reader/writer, when the verification information includes at least one of the third location information or the third time information, the reader/writer needs to perform the following steps:

The reader/writer determines whether a distance between a third location indicated by the third location information and the first location indicated by the first location information in the read request message sent by the reader/writer is less than a second distance threshold; or the reader/writer determines whether a time difference between third time indicated by the third time information and the first time indicated by the first time information in the read request message sent by the reader/writer is less than a second time threshold.

If the reader/writer determines that the distance between the third location and the first location is less than the second distance threshold, or the reader/writer determines that the time difference between the third time and the first time is less than the second time threshold, it indicates that the read response message received by the reader/writer is a message sent by the vehicle-mounted device in response to the read request message sent by the reader/writer, and the reader/writer has a permission to read the electronic registration identification of the motor vehicle, and in this case, the reader/writer determines, based on the UID of the electronic registration identification of the motor vehicle, the read password corresponding to the UID, and performs second decryption processing on the first encrypted information based on the determined read password, to obtain the electronic registration identification of the motor vehicle.

In another optional implementation, the third location indicated by the third location information in the verification information is a location at which the vehicle-mounted device performs encryption processing on the electronic registration identification of the motor vehicle, and the third time indicated by the third time information is time at which the vehicle-mounted device performs encryption processing on the electronic registration identification of the motor vehicle. In this case, the reader/writer needs to perform the following steps:

The reader/writer determines whether a distance between the third location indicated by the third location information and a location at which the reader/writer performs the first decryption is less than a first distance threshold; or the reader/writer determines whether a time difference between the third time indicated by the third time information and the first time indicated by the first time information in the read request message sent by the reader/writer is less than a first time threshold.

If the reader/writer determines that the distance between the third location and the location at which the reader/writer performs the first decryption is less than the first distance threshold, or determines that the time difference between the third time and the first time is less than the first time threshold, it indicates that the reader/writer is in a range allowed by the vehicle-mounted device to read the electronic registration identification of the motor vehicle, and in this case, the reader/writer determines, based on the UID of the electronic registration identification of the motor vehicle, the read password corresponding to the UID, and performs second decryption processing on the first encrypted information based on the determined read password, to obtain the electronic registration identification of the motor vehicle.

It should be noted that, the reader/writer may further determine whether a distance between the third location and a location at which the reader/writer receives the read response message is less than the first distance threshold, to determine whether the reader/writer is in the range allowed by the vehicle-mounted device to read the electronic registration identification of the motor vehicle.

In the foregoing design, a case in which benefits of a victim are damaged because a man-in-the-middle maliciously obtains the first encrypted information and replays the first encrypted information in a remote place can be prevented. For example, the man-in-the-middle is prevented from replaying the first encrypted information in different cities, pretending to be the victim to perform a traffic violation, or paying a road fee by using information about the victim.

(3) If the verification information includes the UID of the electronic registration identification of the motor vehicle and the pseudonym certificate identifier of the vehicle-mounted device, after the reader/writer determines that the pseudonym certificate identifier included in the verification information is the same as a pseudonym certificate identifier corresponding to the signature of the read response message, the reader/writer determines, based on the UID of the electronic registration identification of the motor vehicle, the read password corresponding to the UID, and performs second decryption processing on the first encrypted information based on the determined read password, to obtain the electronic registration identification of the motor vehicle.

In the foregoing design, the pseudonym certificate identifier used by the vehicle-mounted device can be bound to the first encrypted information, to prevent a case in which benefits of a victim are damaged because a man-in-the-middle maliciously obtains the first encrypted information from the read response message and replays the first encrypted information by using a pseudonym certificate of the man-in-the-middle. For example, the man-in-the-middle is prevented from pretending to be the victim to perform a traffic violation or paying a road fee by using information about the victim.

It should be noted that the reader/writer may locally store a correspondence between the UID of the electronic registration identification of the motor vehicle and the read password. After obtaining the UID of the electronic registration identification of the motor vehicle through the first decryption processing, the reader/writer searches a local storage for the read password corresponding to the UID of the electronic registration identification of the motor vehicle, and performs second decryption processing on the first encrypted information based on the found read password.

Alternatively, because there may be a relatively large quantity of correspondences between the UID of the electronic registration identification of the motor vehicle and the read password, and it is difficult to maintain the reader/writer locally, a UID of the electronic registration identification of the motor vehicle that the reader/writer has a permission to read and a corresponding read password may be stored in the server. After obtaining the UID of the electronic registration identification of the motor vehicle through the first decryption processing, the reader/writer sends a reader/writer identifier and the UID of the electronic registration identification of the motor vehicle to the server. The server determines, based on the reader/writer identifier, the UID of the electronic registration identification of the motor vehicle that the reader/writer has the permission to read and the corresponding read password, and searches for a read password corresponding to the UID of the electronic registration identification of the motor vehicle that is sent by the reader/writer. The server returns the found read password to the reader/writer, and the reader/writer may perform second decryption processing on the first encrypted information based on the received read password.

According to the method for transmitting an electronic registration identification of a motor vehicle provided in this embodiment of this application, after receiving the read request message that is sent by the reader/writer and that is used to request to read the electronic registration identification of the motor vehicle, the vehicle-mounted device performs verification on the reader/writer by using the read request message; and after determining that the verification on the reader/writer succeeds, the vehicle-mounted device encrypts the electronic registration identification of the motor vehicle, and sends the encrypted electronic registration identification of the motor vehicle to the reader/writer by using the read response message. In this embodiment of this application, the electronic registration identification of the motor vehicle is stored in the vehicle-mounted device, and the reader/writer is verified by using a computing capability of the vehicle-mounted device that is better than that of an existing electronic label, and after it is determined that the reader/writer has the permission to read the electronic registration identification of the motor vehicle that is stored in the vehicle-mounted device, the electronic registration identification of the motor vehicle is encrypted and sent to the reader/writer by using the read response message. Compared with an existing manner in which a secure channel is established between an electronic label and the reader/writer, this reduces a quantity of rounds of information exchange and reduces overheads.

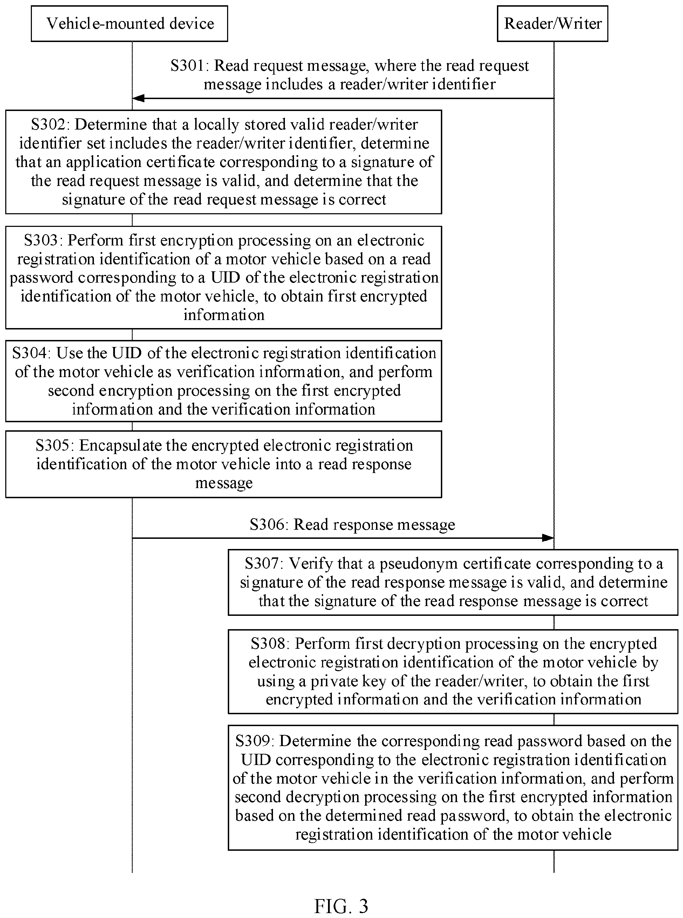

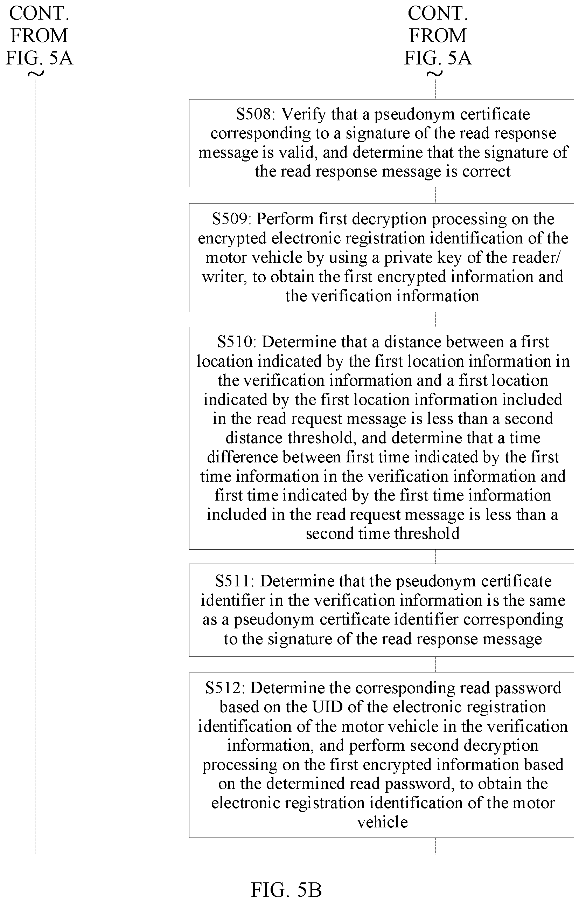

Based on the foregoing embodiments, this application further provides some instances of transmission of the electronic registration identification of the motor vehicle. The following describes each instance in detail with reference to FIG. 3 to FIG. 5A and FIG. 5B.

Instance 1: As shown in FIG. 3, a method for transmitting an electronic registration identification of a motor vehicle provided in this instance includes the following steps.

S301: A reader/writer sends a read request message to a vehicle-mounted device through a PC5 interface, where the read request message includes a reader/writer identifier.

The read request message is a message obtained after the reader/writer performs signature processing by using an application certificate of the reader/writer.

S302: The vehicle-mounted device determines that a locally stored valid reader/writer identifier set includes the reader/writer identifier, determines that an application certificate corresponding to a signature of the read request message is valid, and determines that the signature of the read request message is correct.

For a specific process, refer to the specific descriptions in S202 in the embodiment shown in FIG. 2. Details are not described herein again.

S303: The vehicle-mounted device performs first encryption processing on an electronic registration identification of a motor vehicle based on a read password corresponding to a UID of the electronic registration identification of the motor vehicle, to obtain first encrypted information.

S304: The vehicle-mounted device uses the UID of the electronic registration identification of the motor vehicle as verification information, and performs second encryption processing on the first encrypted information and the verification information by using a public key of the reader/writer.

S305: The vehicle-mounted device encapsulates the encrypted electronic registration identification of the motor vehicle into a read response message.

S306: The vehicle-mounted device sends the read response message to the reader/writer through the PC5 interface.

The read response message is a message obtained after the vehicle-mounted device performs signature processing by using a pseudonym certificate of the vehicle-mounted device.

S307: The reader/writer verifies that a pseudonym certificate corresponding to a signature of the read response message is valid, and determines that the signature of the read response message is correct.

For a specific process, refer to the specific descriptions in S205 in the embodiment shown in FIG. 2. Details are not described herein again.

S308: The reader/writer performs first decryption processing on the encrypted electronic registration identification of the motor vehicle by using a private key of the reader/writer, to obtain the first encrypted information and the verification information.

S309: The reader/writer determines the corresponding read password based on the UID of the electronic registration identification of the motor vehicle in the verification information, and performs second decryption processing on the first encrypted information based on the determined read password, to obtain the electronic registration identification of the motor vehicle.

In this instance, the vehicle-mounted device and the reader/writer may complete identity authentication of each other and transmission of the electronic registration identification of the motor vehicle in a process of one round of information exchange, so that confidentiality of transmission of the electronic registration identification of the motor vehicle is ensured, and a quantity of rounds of information exchange is reduced, and therefore, overheads of transmission of the electronic registration identification of the motor vehicle are reduced.

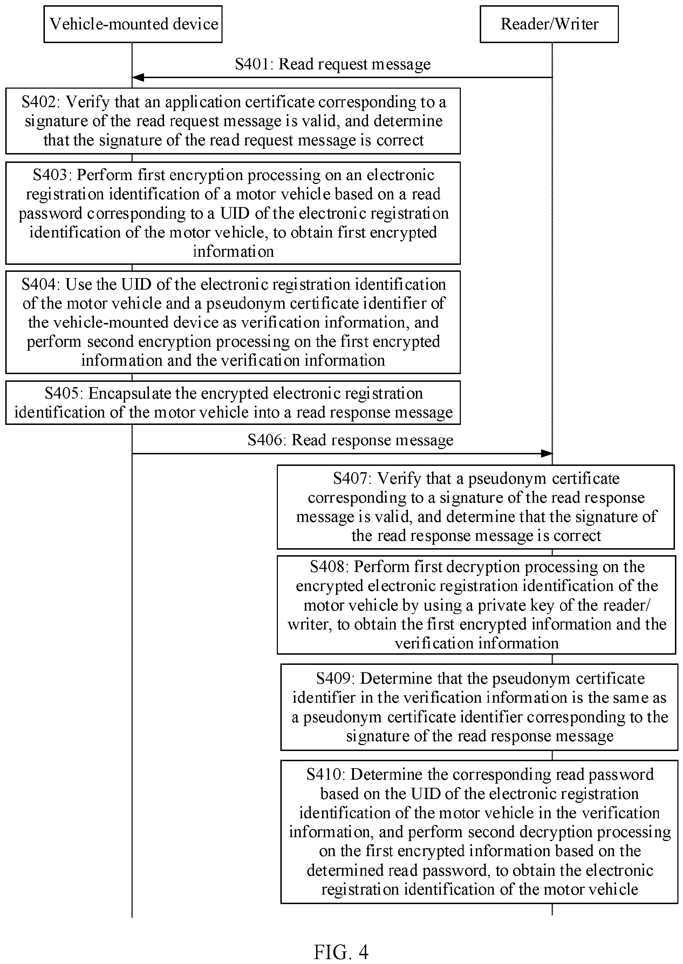

Instance 2: As shown in FIG. 4, a method for transmitting an electronic registration identification of a motor vehicle provided in this instance includes the following steps.

S401: A reader/writer sends a read request message to a vehicle-mounted device through a PC5 interface.

The read request message is a message obtained after the reader/writer performs signature processing by using an application certificate of the reader/writer.

S402: The vehicle-mounted device verifies that an application certificate corresponding to a signature of the read request message is valid, and determines that the signature of the read request message is correct.

For a specific process, refer to the specific descriptions in S202 in the embodiment shown in FIG. 2. Details are not described herein again.

S403: The vehicle-mounted device performs first encryption processing on an electronic registration identification of a motor vehicle based on a read password corresponding to a UID of the electronic registration identification of the motor vehicle, to obtain first encrypted information.

S404: The vehicle-mounted device uses the UID of the electronic registration identification of the motor vehicle and a pseudonym certificate identifier of the vehicle-mounted device as verification information, and performs second encryption processing on the first encrypted information and the verification information by using a public key of the reader/writer.

S405: The vehicle-mounted device encapsulates the encrypted electronic registration identification of the motor vehicle into a read response message.

S406: The vehicle-mounted device sends the read response message to the reader/writer through the PC5 interface.

The read response message is a message obtained after the vehicle-mounted device performs signature processing by using a pseudonym certificate of the vehicle-mounted device.

S407: The reader/writer verifies that a pseudonym certificate corresponding to a signature of the read response message is valid, and determines that the signature of the read response message is correct.

For a specific process, refer to the specific descriptions in S205 in the embodiment shown in FIG. 2. Details are not described herein again.

S408: The reader/writer performs first decryption processing on the encrypted electronic registration identification of the motor vehicle by using a private key of the reader/writer, to obtain the first encrypted information and the verification information.

S409: The reader/writer determines that the pseudonym certificate identifier in the verification information is the same as a pseudonym certificate identifier corresponding to the signature of the read response message.

S410: The reader/writer determines the corresponding read password based on the UID of the electronic registration identification of the motor vehicle in the verification information, and performs second decryption processing on the first encrypted information based on the determined read password, to obtain the electronic registration identification of the motor vehicle.

In this instance, the vehicle-mounted device uses the UID of the electronic registration identification of the motor vehicle and the pseudonym certificate identifier of the vehicle-mounted device as the verification information, so that the pseudonym certificate identifier used by the vehicle-mounted device can be bound to the first encrypted information. After receiving the read response message sent by the vehicle-mounted device, the reader/writer needs to determine whether the pseudonym certificate identifier in the verification information is the same as the pseudonym certificate identifier corresponding to the signature of the read response message, to prevent a case in which benefits of a victim are damaged because a man-in-the-middle maliciously obtains the first encrypted information from the read response message and replays the first encrypted information by using a pseudonym certificate of the man-in-the-middle. For example, the man-in-the-middle is prevented from pretending to be the victim to perform a traffic violation or paying a road fee by using information about the victim.

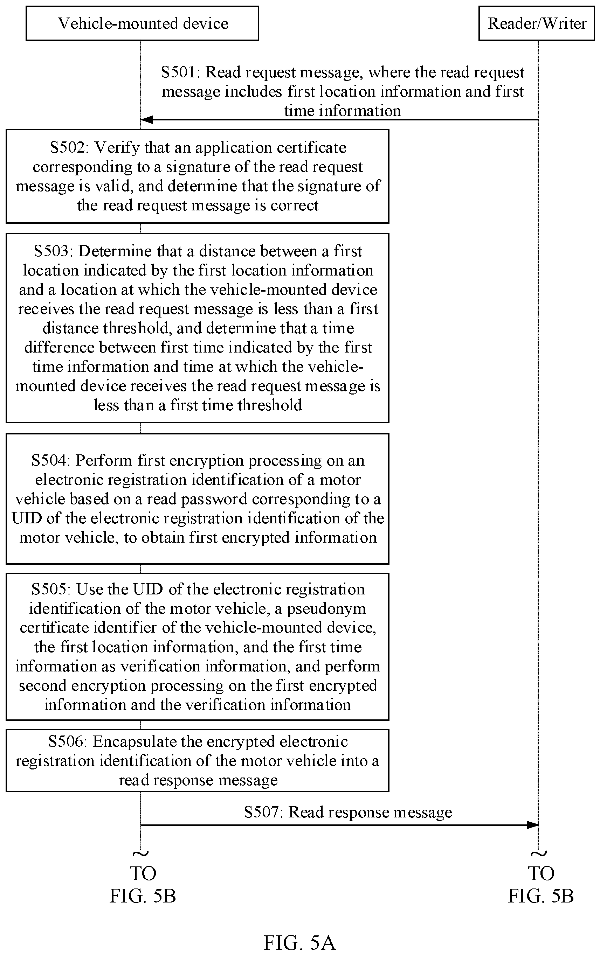

Instance 3: As shown in FIG. 5A and FIG. 5B, a method for transmitting an electronic registration identification of a motor vehicle provided in this instance includes the following steps.

S501: A reader/writer sends a read request message to a vehicle-mounted device through a PC5 interface, where the read request message includes first location information and first time information.

The read request message is a message obtained after the reader/writer performs signature processing by using an application certificate of the reader/writer.

S502: The vehicle-mounted device verifies that an application certificate corresponding to a signature of the read request message is valid, and determines that the signature of the read request message is correct.

For a specific process, refer to the specific descriptions in S202 in the embodiment shown in FIG. 2. Details are not described herein again.

S503: The vehicle-mounted device determines that a distance between a first location indicated by the first location information and a location at which the vehicle-mounted device receives the read request message is less than a first distance threshold, and determines that a time difference between first time indicated by the first time information and time at which the vehicle-mounted device receives the read request message is less than a first time threshold.

S504: The vehicle-mounted device performs first encryption processing on an electronic registration identification of a motor vehicle based on a read password corresponding to a UID of the electronic registration identification of the motor vehicle, to obtain first encrypted information.

S505: The vehicle-mounted device uses the UID of the electronic registration identification of the motor vehicle, a pseudonym certificate identifier of the vehicle-mounted device, the first location information, and the first time information as verification information, and performs second encryption processing on the first encrypted information and the verification information by using a public key of the reader/writer.

S506: The vehicle-mounted device encapsulates the encrypted electronic registration identification of the motor vehicle into an initial read response message.

S507: The vehicle-mounted device sends the read response message to the reader/writer through the PC5 interface.

The read response message is a message obtained after the vehicle-mounted device performs signature processing by using a pseudonym certificate of the vehicle-mounted device.

S508: The reader/writer verifies that a pseudonym certificate corresponding to a signature of the read response message is valid, and determines that the signature of the read response message is correct.

For a specific process, refer to the specific descriptions in S205 in the embodiment shown in FIG. 2. Details are not described herein again.

S509: The reader/writer performs first decryption processing on the encrypted electronic registration identification of the motor vehicle by using a private key of the reader/writer, to obtain the first encrypted information and the verification information.

S510: The reader/writer determines that a distance between a first location indicated by the first location information in the verification information and a first location indicated by the first location information included in the read request message is less than a second distance threshold, and determines that a time difference between first time indicated by the first time information in the verification information and first time indicated by the first time information included in the read request message is less than a second time threshold.

S511: The reader/writer determines that the pseudonym certificate identifier in the verification information is the same as a pseudonym certificate identifier corresponding to the signature of the read response message.

S512: The reader/writer determines the corresponding read password based on the UID of the electronic registration identification of the motor vehicle in the verification information, and performs second decryption processing on the first encrypted information based on the determined read password, to obtain the electronic registration identification of the motor vehicle.

In this instance, the vehicle-mounted device uses the UID of the electronic registration identification of the motor vehicle, the pseudonym certificate identifier of the vehicle-mounted device, the first location information, and the first time information as the verification information, so that the pseudonym certificate identifier of the vehicle-mounted device, the first location information, and the first time information can be bound to the first encrypted information. After receiving the read response message sent by the vehicle-mounted device, the reader/writer needs to determine whether the pseudonym certificate identifier in the verification information is the same as the pseudonym certificate identifier corresponding to the signature of the read response message, determine whether the first location indicated by the first location information is the same as a current location of the reader/writer, and determine whether the first time indicated by the first time information is the same as time at which the reader/writer sends the read request message, to prevent a case in which benefits of a victim are damaged because a man-in-the-middle maliciously obtains the first encrypted information from the read response message and replays the first encrypted information by using a pseudonym certificate of the man-in-the-middle. For example, the man-in-the-middle is prevented from pretending to be the victim to perform a traffic violation or paying a road fee by using information about the victim.

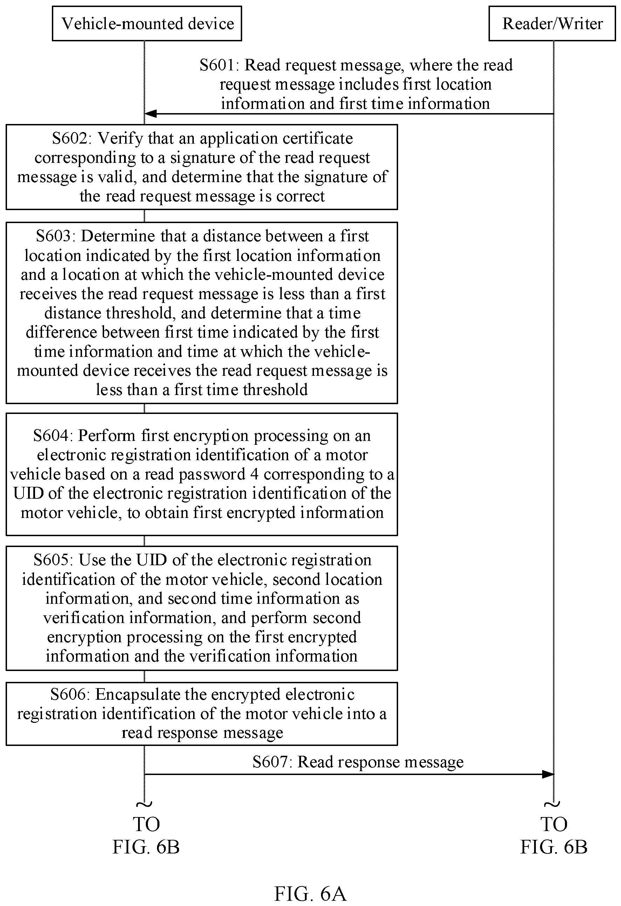

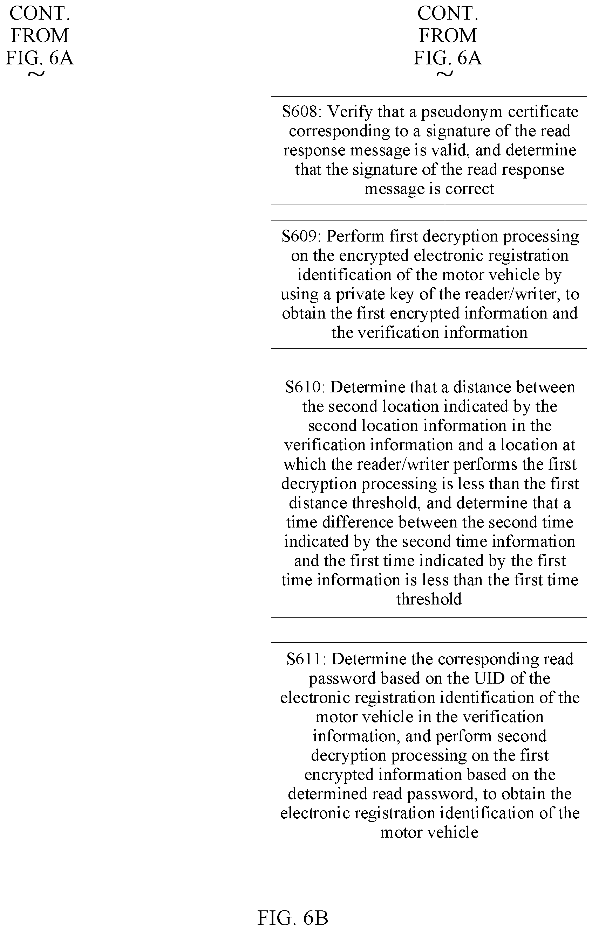

Instance 4: As shown in FIG. 6A and FIG. 6B, a method for transmitting an electronic registration identification of a motor vehicle provided in this instance includes the following steps.

S601: A reader/writer sends a read request message to a vehicle-mounted device through a PC5 interface, where the read request message includes first location information and first time information.

The read request message is a message obtained after the reader/writer performs signature processing by using an application certificate of the reader/writer.

S602: The vehicle-mounted device verifies that an application certificate corresponding to a signature of the read request message is valid, and determines that the signature of the read request message is correct.

For a specific process, refer to the specific descriptions in S202 in the embodiment shown in FIG. 2. Details are not described herein again.

S603: The vehicle-mounted device determines that a distance between a first location indicated by the first location information and a location at which the vehicle-mounted device receives the read request message is less than a first distance threshold, and determines that a time difference between first time indicated by the first time information and time at which the vehicle-mounted device receives the read request message is less than a first time threshold.

S604: The vehicle-mounted device performs first encryption processing on an electronic registration identification of a motor vehicle based on a read password corresponding to a UID of the electronic registration identification of the motor vehicle, to obtain first encrypted information.

S605: The vehicle-mounted device uses the UID of the electronic registration identification of the motor vehicle, second location information, and second time information as verification information, and performs second encryption processing on the first encrypted information and the verification information by using a public key of the reader/writer.

A second location indicated by the second location information is a location at which the vehicle-mounted device performs encryption processing on the electronic registration identification of the motor vehicle, and second time indicated by the second time information is time at which the vehicle-mounted device performs encryption processing on the electronic registration identification of the motor vehicle.

S606: The vehicle-mounted device encapsulates the encrypted electronic registration identification of the motor vehicle into an initial read response message.

S607: The vehicle-mounted device sends the read response message to the reader/writer through the PC5 interface.

The read response message is a message obtained after the vehicle-mounted device performs signature processing by using a pseudonym certificate of the vehicle-mounted device.

S608: The reader/writer verifies that a pseudonym certificate corresponding to a signature of the read response message is valid, and determines that the signature of the read response message is correct.

For a specific process, refer to the specific descriptions in S205 in the embodiment shown in FIG. 2. Details are not described herein again.

S609: The reader/writer performs first decryption processing on the encrypted electronic registration identification of the motor vehicle by using a private key of the reader/writer, to obtain the first encrypted information and the verification information.

S610: The reader/writer determines that a distance between the second location indicated by the second location information in the verification information and a location at which the reader/writer performs the first decryption processing is less than the first distance threshold, and determines that a time difference between the second time indicated by the second time information and the first time indicated by the first time information is less than the first time threshold.

S611: The reader/writer determines the corresponding read password based on the UID of the electronic registration identification of the motor vehicle in the verification information, and performs second decryption processing on the first encrypted information based on the determined read password, to obtain the electronic registration identification of the motor vehicle.

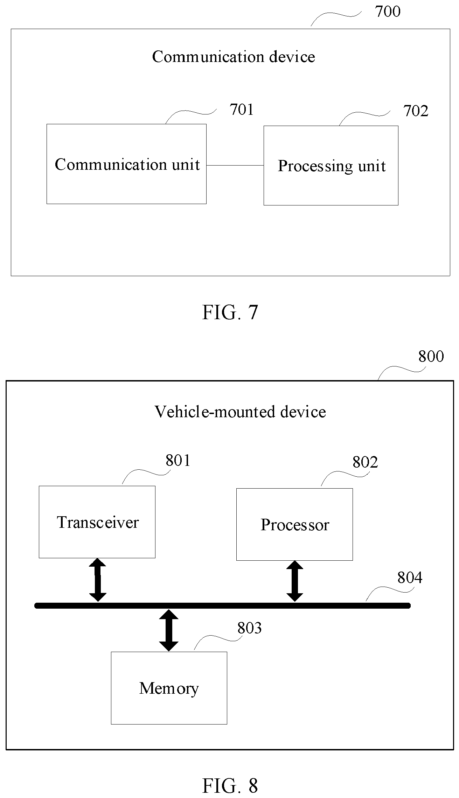

Based on a same technical concept, this application further provides a communication apparatus. A structure of the apparatus is shown in FIG. 7, and includes a communication unit 701 and a processing unit 702. The communication apparatus 700 may be applied to a vehicle-mounted device or a reader/writer in the methods for transmitting an electronic registration identification of a motor vehicle shown in FIG. 2 to FIG. 6A and FIG. 6B. The following describes functions of the units in the communication apparatus 700.

The communication unit 701 is configured to receive and send data.

When the communication apparatus 700 is applied to a vehicle-mounted device or a reader/writer, the communication unit 701 may also be referred to as a physical interface, a communication module, a communication interface, or an input/output interface. The vehicle-mounted device or the reader/writer may be connected to a network cable or a cable by using the communication unit, to establish a physical connection to another device. For example, the communication unit 701 may be a short-range direct connection communication interface (PC5), and the vehicle-mounted device or the reader/writer may send and receive data through the PC5 interface.

The following describes functions of the processing unit 702 when the communication apparatus 700 is applied to the vehicle-mounted device.

The processing unit 702 is configured to: receive a read request message from a reader/writer by using the communication unit 701, where the read request message is used to request to read an electronic registration identification of a motor vehicle that is stored in the vehicle-mounted device; perform verification on the reader/writer by using the read request message, and after it is determined that the verification succeeds, perform encryption processing on the electronic registration identification of the motor vehicle; and send a read response message to the reader/writer by using the communication unit 701, where the read response message includes the encrypted electronic registration identification of the motor vehicle.

In an implementation, the processing unit 702 is specifically configured to:
perform first encryption processing on the electronic registration identification of the motor vehicle based on a read password corresponding to a unique identity UID of the electronic registration identification of the motor vehicle, to obtain first encrypted information;
determine verification information, where the verification information includes the UID; and
perform second encryption processing on the first encrypted information and the verification information by using a public key of the reader/writer.

In an implementation, the read request message includes at least one of first location information or first time information, a first location indicated by the first location information is a location at which the reader/writer sends the read request message, and first time indicated by the first time information is time at which the reader/writer sends the read request message. The verification information further includes at least one of the first location information or the first time information.

The processing unit 702 is further configured to:
before performing encryption processing on the electronic registration identification of the motor vehicle, determine that a distance between the first location indicated by the first location information and a location at which the vehicle-mounted device receives the read request message is less than a first distance threshold, or determine that a time difference between the first time indicated by the first time information and time at which the vehicle-mounted device receives the read request message is less than a first time threshold.

In an implementation, the verification information further includes at least one of the first location information or the first time information.

In an implementation, the verification information further includes at least one of second location information or second time information, a second location indicated by the second location information is a location at which the vehicle-mounted device performs encryption processing on the electronic registration identification of the motor vehicle, and second time indicated by the second time information is time at which the vehicle-mounted device performs encryption processing on the electronic registration identification of the motor vehicle.

In an implementation, the verification information further includes a pseudonym certificate identifier of the vehicle-mounted device.

In an implementation, the read response message is a message obtained after signature processing is performed based on a pseudonym certificate of the vehicle-mounted device.

In an implementation, when performing verification on the reader/writer by using the read request message, the processing unit 702 is specifically configured to:
determine an upper-level certificate public key of an application certificate corresponding to a signature of the read request message, perform decryption processing on the application certificate by using the upper-level certificate public key to obtain a first digest, calculate a second digest based on content of the application certificate, and determine, through comparison, whether the first digest is the same as the second digest; and
determine an upper-level public key of the signature of the read request message, perform decryption processing on the signature by using the upper-level public key to obtain a third digest, calculate a fourth digest based on content of the signature, and determine, through comparison, whether the third digest is the same as the fourth digest.

When determining that the verification on the reader/writer succeeds, the processing unit 702 is specifically configured to: determine that the first digest is the same as the second digest, and determine that the third digest is the same as the fourth digest.

The following describes functions of the processing unit 702 when the communication apparatus 700 is applied to the reader/writer.

The processing unit 702 is configured to: send a read request message by using the communication unit 701, where the read request message is used to request to read an electronic registration identification of a motor vehicle that is stored in a vehicle-mounted device, and the read request message includes information used by the vehicle-mounted device to perform verification on the reader/writer; receive, by using the communication unit 701, a read response message sent by the vehicle-mounted device, where the read response message includes the encrypted electronic registration identification of the motor vehicle; and perform verification on the vehicle-mounted device by using the read response message, and after determining that the verification succeeds, perform decryption processing on the encrypted electronic registration identification of the motor vehicle to obtain the electronic registration identification of the motor vehicle.

In an implementation, the processing unit 702 is specifically configured to:
perform first decryption processing on the encrypted electronic registration identification of the motor vehicle by using a private key of the reader/writer, to obtain first encrypted information and verification information, where the verification information includes a unique identity UID corresponding to the electronic registration identification of the motor vehicle; and
perform second decryption processing on the first encrypted information based on a read password corresponding to the UID, to obtain the electronic registration identification of the motor vehicle.

In an implementation, the read request message includes at least one of first location information or first time information, a first location indicated by the first location information is a location at which the reader/writer sends the read request message, and first time indicated by the first time information is time at which the reader/writer sends the read request message.

In an implementation, the verification information further includes at least one of second location information or second time information.

The processing unit 702 is further configured to:
before performing second decryption processing on the first encrypted information based on the read password corresponding to the UID, determine that a distance between a second location indicated by the second location information and the first location indicated by the first location information is less than a second distance threshold, or determine that a time difference between second time indicated by the second time information and the first time indicated by the first time information is less than a second time threshold.

In an implementation, the verification information further includes at least one of second location information or second time information.

The processing unit 702 is further configured to:
before the reader/writer performs second decryption processing on the first encrypted information based on the read password corresponding to the UID, determine that a distance between a second location indicated by the second location information and a location at which the reader/writer performs the first decryption is less than a first distance threshold, or determine that a time difference between second time indicated by the second time information and the first time is less than a first time threshold.

In an implementation, the verification information further includes a pseudonym certificate identifier, and the processing unit 702 is further configured to:
before performing second decryption processing on the first encrypted information based on the read password corresponding to the UID, determine that the pseudonym certificate identifier included in the verification information is the same as a pseudonym certificate identifier corresponding to a signature of the read response message.

In an implementation, the read request message is a message obtained after signature processing is performed based on an application certificate of the reader/writer.

In an implementation, when performing verification on the vehicle-mounted device, the processing unit 702 is specifically configured to:
determine an upper-level certificate public key of a pseudonym certificate corresponding to the signature of the read response message, perform decryption processing on the pseudonym certificate by using the upper-level certificate public key to obtain a fifth digest, calculate a sixth digest based on content of the pseudonym certificate, and determine, through comparison, whether the fifth digest is the same as the sixth digest; and
determine an upper-level public key of the signature of the read response message, perform decryption processing on the signature by using the upper-level public key to obtain a seventh digest, calculate an eighth digest based on content of the signature, and determine, through comparison, whether the seventh digest is the same as the eighth digest.

When determining that the verification on the vehicle-mounted device succeeds, the processing unit 702 is specifically configured to: determine that the fifth digest is the same as the sixth digest, and determine that the seventh digest is the same as the eighth digest.

Based on a same technical concept, this application further provides a vehicle-mounted device 800. The vehicle-mounted device 800 may implement functions of the vehicle-mounted device in the methods for transmitting an electronic registration identification of a motor vehicle shown in FIG. 2 to FIG. 6A and FIG. 6B. As shown in FIG. 8, the vehicle-mounted device 800 includes a transceiver 801, a processor 802, and a memory 803. The transceiver 801, the processor 802, and the memory 803 are connected to each other.

Optionally, the transceiver 801, the processor 802, and the memory 803 are connected to each other by using a bus 804. The bus 804 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 8, but this does not mean that there is only one bus or only one type of bus.

The transceiver 801 is configured to receive and send data, to implement communication and interaction with another device.

The processor 802 is configured to: receive a read request message from a reader/writer by using the transceiver 801, where the read request message is used to request to read an electronic registration identification of a motor vehicle that is stored in the vehicle-mounted device; perform verification on the reader/writer by using the read request message, and after it is determined that the verification succeeds, perform encryption processing on the electronic registration identification of the motor vehicle; and send a read response message to the reader/writer by using the transceiver 801, where the read response message includes the encrypted electronic registration identification of the motor vehicle.

Optionally, the processor 802 is specifically configured to:
perform first encryption processing on the electronic registration identification of the motor vehicle based on a read password corresponding to a unique identity UID of the electronic registration identification of the motor vehicle, to obtain first encrypted information;
determine verification information, where the verification information includes the UID; and
perform second encryption processing on the first encrypted information and the verification information by using a public key of the reader/writer.

In an implementation, the read request message includes at least one of first location information or first time information, a first location indicated by the first location information is a location at which the reader/writer sends the read request message, and first time indicated by the first time information is time at which the reader/writer sends the read request message. The verification information further includes at least one of the first location information or the first time information.

The processor 802 is further configured to:
before performing encryption processing on the electronic registration identification of the motor vehicle, determine that a distance between the first location indicated by the first location information and a location at which the vehicle-mounted device receives the read request message is less than a first distance threshold, or determine that a time difference between the first time indicated by the first time information and time at which the vehicle-mounted device receives the read request message is less than a first time threshold.

In an implementation, the verification information further includes at least one of the first location information or the first time information.

In an implementation, the verification information further includes at least one of second location information or second time information, a second location indicated by the second location information is a location at which the vehicle-mounted device performs encryption processing on the electronic registration identification of the motor vehicle, and second time indicated by the second time information is time at which the vehicle-mounted device performs encryption processing on the electronic registration identification of the motor vehicle.

In an implementation, the verification information further includes a pseudonym certificate identifier of the vehicle-mounted device.

In an implementation, the read response message is a message obtained after signature processing is performed based on a pseudonym certificate of the vehicle-mounted device.

In an implementation, when performing verification on the reader/writer by using the read request message, the processor 802 is specifically configured to:
determine an upper-level certificate public key of an application certificate corresponding to a signature of the read request message, perform decryption processing on the application certificate by using the upper-level certificate public key to obtain a first digest, calculate a second digest based on content of the application certificate, and determine, through comparison, whether the first digest is the same as the second digest; and
determine an upper-level public key of the signature of the read request message, perform decryption processing on the signature by using the upper-level public key to obtain a third digest, calculate a fourth digest based on content of the signature, and determine, through comparison, whether the third digest is the same as the fourth digest.

When determining that the verification on the reader/writer succeeds, the processor 802 is specifically configured to: determine that the first digest is the same as the second digest, and determine that the third digest is the same as the fourth digest.

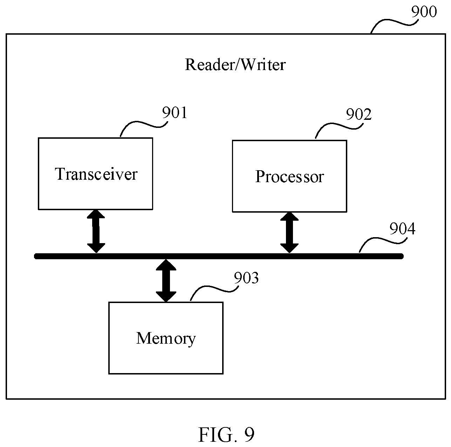

Based on a same technical concept, this application further provides a reader/writer 900. The reader/writer 900 may implement functions of the reader/writer in the methods for transmitting an electronic registration identification of a motor vehicle shown in FIG. 2 to FIG. 6A and FIG. 6B. As shown in FIG. 9, the reader/writer 900 includes a transceiver 901, a processor 902, and a memory 903. The transceiver 901, the processor 902, and the memory 903 are connected to each other.

Optionally, the transceiver 901, the processor 902, and the memory 903 are connected to each other through a bus 904. The bus 904 may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 9, but this does not mean that there is only one bus or only one type of bus.

The transceiver 901 is configured to receive and send data, to implement communication and interaction with another device.

The processor 902 is configured to send a read request message by using the transceiver 901, where the read request message is used to request to read an electronic registration identification of a motor vehicle that is stored in a vehicle-mounted device, and the read request message includes information used by the vehicle-mounted device to perform verification on the reader/writer; receive, by using the transceiver 901, a read response message sent by the vehicle-mounted device, where the read response message includes the encrypted electronic registration identification of the motor vehicle; and perform verification on the vehicle-mounted device by using the read response message, and after determining that the verification succeeds, perform decryption processing on the encrypted electronic registration identification of the motor vehicle to obtain the electronic registration identification of the motor vehicle.

In an implementation, the processor 902 is specifically configured to:
perform first decryption processing on the encrypted electronic registration identification of the motor vehicle by using a private key of the reader/writer, to obtain first encrypted information and verification information, where the verification information includes a unique identity UID corresponding to the electronic registration identification of the motor vehicle; and
perform second decryption processing on the first encrypted information based on a read password corresponding to the UID, to obtain the electronic registration identification of the motor vehicle.

In an implementation, the read request message includes at least one of first location information or first time information, a first location indicated by the first location information is a location at which the reader/writer sends the read request message, and first time indicated by the first time information is time at which the reader/writer sends the read request message.

In an implementation, the verification information further includes at least one of second location information or second time information.

The processor 902 is further configured to:
before performing second decryption processing on the first encrypted information based on the read password corresponding to the UID, determine that a distance between a second location indicated by the second location information and the first location indicated by the first location information is less than a second distance threshold, or determine that a time difference between second time indicated by the second time information and the first time indicated by the first time information is less than a second time threshold.

In an implementation, the verification information further includes at least one of second location information or second time information.

The processor 902 is further configured to:
before the reader/writer performs second decryption processing on the first encrypted information based on the read password corresponding to the UID, determine that a distance between a second location indicated by the second location information and a location at which the reader/writer performs the first decryption is less than a first distance threshold, or determine that a time difference between second time indicated by the second time information and the first time is less than a first time threshold.

In an implementation, the verification information further includes a pseudonym certificate identifier, and the processor 902 is further configured to:
before performing second decryption processing on the first encrypted information based on the read password corresponding to the UID, determine that the pseudonym certificate identifier included in the verification information is the same as a pseudonym certificate identifier corresponding to a signature of the read response message.

In an implementation, the read request message is a message obtained after signature processing is performed based on an application certificate of the reader/writer.

In an implementation, when performing verification on the vehicle-mounted device, the processor 902 is specifically configured to:
determine an upper-level certificate public key of a pseudonym certificate corresponding to the signature of the read response message, perform decryption processing on the pseudonym certificate by using the upper-level certificate public key to obtain a fifth digest, calculate a sixth digest based on content of the pseudonym certificate, and determine, through comparison, whether the fifth digest is the same as the sixth digest; and
determine an upper-level public key of the signature of the read response message, perform decryption processing on the signature by using the upper-level public key to obtain a seventh digest, calculate an eighth digest based on content of the signature, and determine, through comparison, whether the seventh digest is the same as the eighth digest.

When determining that the verification on the vehicle-mounted device succeeds, the processor 902 is specifically configured to: determine that the fifth digest is the same as the sixth digest, and determine that the seventh digest is the same as the eighth digest.

It may be understood that the memory in FIG. 8 and FIG. 9 in this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), and is used as an external cache. Through example but not limitative descriptions, many forms of RAMs may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM). It should be noted that a memory in systems and methods described in this specification includes but is not limited to these and any memory of another proper type.

Based on the foregoing embodiments, an embodiment of this application further provides a computer program. When the computer program is run on a computer, the computer is enabled to perform the methods for transmitting an electronic registration identification of a motor vehicle provided in the embodiments shown in FIG. 2 to FIG. 6A and FIG. 6B.

Based on the foregoing embodiments, an embodiment of this application further provides a computer-readable storage medium. The computer-readable storage medium stores a computer program. When the computer program is executed by a computer, the computer is enabled to perform the methods for transmitting an electronic registration identification of a motor vehicle provided in the embodiments shown in FIG. 2 to FIG. 6A and FIG. 6B. The storage medium may be any available medium that can be accessed by the computer. The following provides an example but does not impose a limitation: The computer-readable medium may include a RAM, a ROM, an EEPROM, a CD-ROM, or another optical disc storage or disk storage medium, or another magnetic storage device, or any other medium that can carry or store expected program code in a form of an instruction or a data structure and can be accessed by the computer.

Based on the foregoing embodiments, an embodiment of this application further provides a chip. The chip is configured to read a computer program stored in a memory, to implement the methods for transmitting an electronic registration identification of a motor vehicle provided in the embodiments shown in FIG. 2 to FIG. 6A and FIG. 6B.

Based on the foregoing embodiments, an embodiment of this application provides a chip system. The chip system includes a processor, configured to support a computer apparatus in implementing functions related to the vehicle-mounted device or the reader/writer in the embodiments shown in FIG. 2 to FIG. 6A and FIG. 6B. In a possible design, the chip system further includes a memory. The memory is configured to store a program and data that are used for the computer apparatus. The chip system may include a chip, or may include a chip and another discrete component.

A person skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of processes and/or blocks in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may alternatively be loaded onto a computer or another programmable data processing device, so that a series of operations and steps are performed on the computer or the another programmable device, so that computer-implemented processing is generated. Therefore, the instructions executed on the computer or the another programmable device provide steps for implementing a specific function in one or more procedures in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of protection defined by the following claims and their equivalent technologies.

## Claims

1. A method for transmitting an electronic registration identification of a motor vehicle, wherein the method comprises:
receiving, by a vehicle-mounted device, a read request message from a reader/writer, wherein the read request message is used to request to read an electronic registration identification of a motor vehicle that is stored in the vehicle-mounted device;
performing, by the vehicle-mounted device, verification on the reader/writer by using the read request message, and after determining that the verification succeeds, performing encryption processing on the electronic registration identification of the motor vehicle; and
sending, by the vehicle-mounted device, a read response message to the reader/writer, wherein the read response message comprises the encrypted electronic registration identification of the motor vehicle.

2. The method according to claim 1, wherein the performing, by the vehicle-mounted device, encryption processing on the electronic registration identification of the motor vehicle comprises:
performing, by the vehicle-mounted device, first encryption processing on the electronic registration identification of the motor vehicle based on a read password corresponding to a unique identity UID of the electronic registration identification of the motor vehicle, to obtain first encrypted information;
determining, by the vehicle-mounted device, verification information, wherein the verification information comprises the UID; and
performing, by the vehicle-mounted device, second encryption processing on the first encrypted information and the verification information by using a public key of the reader/writer.

3. The method according to claim 1 or 2, wherein the read request message comprises at least one of first location information or first time information, a first location indicated by the first location information is a location at which the reader/writer sends the read request message, and first time indicated by the first time information is time at which the reader/writer sends the read request message; and
the performing, by the vehicle-mounted device, verification on the reader/writer by using the read request message comprises:
determining, by the vehicle-mounted device, that a distance between the first location indicated by the first location information and a location at which the vehicle-mounted device receives the read request message is less than a first distance threshold; or
determining, by the vehicle-mounted device, that a time difference between the first time indicated by the first time information and time at which the vehicle-mounted device receives the read request message is less than a first time threshold.

4. The method according to claim 3, wherein the verification information further comprises at least one of the first location information or the first time information.

5. The method according to claim 2 or 3, wherein the verification information further comprises at least one of second location information or second time information, a second location indicated by the second location information is a location at which the vehicle-mounted device performs encryption processing on the electronic registration identification of the motor vehicle, and second time indicated by the second time information is time at which the vehicle-mounted device performs encryption processing on the electronic registration identification of the motor vehicle.

6. The method according to any one of claims 2 to 5, wherein the verification information further comprises a pseudonym certificate identifier of the vehicle-mounted device.

7. The method according to any one of claims 1 to 6, wherein the read response message is a message obtained after signature processing is performed based on a pseudonym certificate of the vehicle-mounted device.

8. The method according to any one of claims 1 to 7, wherein the performing, by the vehicle-mounted device, verification on the reader/writer by using the read request message comprises:
determining, by the vehicle-mounted device, an upper-level certificate public key of an application certificate corresponding to a signature of the read request message, performing decryption processing on the application certificate by using the upper-level certificate public key to obtain a first digest, calculating, by the vehicle-mounted device, a second digest based on content of the application certificate, and determining, through comparison, whether the first digest is the same as the second digest; and
determining, by the vehicle-mounted device, an upper-level public key of the signature of the read request message, performing decryption processing on the signature by using the upper-level public key to obtain a third digest, calculating, by the vehicle-mounted device, a fourth digest based on content of the signature, and determining, through comparison, whether the third digest is the same as the fourth digest; and
the determining, by the vehicle-mounted device, that the verification on the reader/writer succeeds comprises:
determining, by the vehicle-mounted device, that the first digest is the same as the second digest, and determining, by the vehicle-mounted device, that the third digest is the same as the fourth digest.

9. A method for transmitting an electronic registration identification of a motor vehicle, wherein the method comprises:
sending, by a reader/writer, a read request message to a vehicle-mounted device, wherein the read request message is used to request to read an electronic registration identification of a motor vehicle that is stored in the vehicle-mounted device, and the read request message comprises information used by the vehicle-mounted device to perform verification on the reader/writer;
receiving, by the reader/writer, a read response message sent by the vehicle-mounted device, wherein the read response message comprises the encrypted electronic registration identification of the motor vehicle; and
performing, by the reader/writer, verification on the vehicle-mounted device by using the read response message, and after determining that the verification succeeds, performing decryption processing on the encrypted electronic registration identification of the motor vehicle to obtain the electronic registration identification of the motor vehicle.

10. The method according to claim 9, wherein the performing, by the reader/writer, decryption processing on the encrypted electronic registration identification of the motor vehicle to obtain the electronic registration identification of the motor vehicle comprises:
performing, by the reader/writer, first decryption processing on the encrypted electronic registration identification of the motor vehicle by using a private key of the reader/writer, to obtain first encrypted information and verification information, wherein the verification information comprises a unique identity UID of the electronic registration identification of the motor vehicle; and
performing, by the reader/writer, second decryption processing on the first encrypted information based on a read password corresponding to the UID, to obtain the electronic registration identification of the motor vehicle.

11. The method according to claim 9 or 10, wherein the read request message comprises at least one of first location information or first time information, a first location indicated by the first location information is a location at which the reader/writer sends the read request message, and first time indicated by the first time information is time at which the reader/writer sends the read request message.

12. The method according to claim 11, wherein the verification information further comprises at least one of second location information or second time information; and
before the performing, by the reader/writer, second decryption processing on the first encrypted information based on a read password corresponding to the UID, the method further comprises:
determining, by the reader/writer, that a distance between a second location indicated by the second location information and the first location indicated by the first location information is less than a second distance threshold; or
determining, by the reader/writer, that a time difference between second time indicated by the second time information and the first time indicated by the first time information is less than a second time threshold.

13. The method according to claim 11, wherein the verification information further comprises at least one of second location information or second time information; and
before the performing, by the reader/writer, second decryption processing on the first encrypted information based on a read password corresponding to the UID, the method further comprises:
determining, by the reader/writer, that a distance between a second location indicated by the second location information and a location at which the reader/writer performs the first decryption is less than a first distance threshold; or
determining, by the reader/writer, that a time difference between second time indicated by the second time information and the first time is less than a first time threshold.

14. The method according to any one of claims 10 to 13, wherein the verification information further comprises a pseudonym certificate identifier; and
before the performing, by the reader/writer, second decryption processing on the first encrypted information based on a read password corresponding to the UID, the method further comprises:
determining, by the reader/writer, that the pseudonym certificate identifier comprised in the verification information is the same as a pseudonym certificate identifier corresponding to a signature of the read response message.

15. The method according to any one of claims 9 to 14, wherein the read request message is a message obtained after signature processing is performed based on an application certificate of the reader/writer.

16. The method according to any one of claims 9 to 15, wherein the performing, by the reader/writer, verification on the vehicle-mounted device comprises:
determining, by the reader/writer, an upper-level certificate public key of a pseudonym certificate corresponding to the signature of the read response message, and performing decryption processing on the pseudonym certificate by using the upper-level certificate public key to obtain a fifth digest, and calculating, by the reader/writer, a sixth digest based on content of the pseudonym certificate, and determining, through comparison, whether the fifth digest is the same as the sixth digest; and
determining, by the reader/writer, an upper-level public key of the signature of the read response message, and performing decryption processing on the signature by using the upper-level public key to obtain a seventh digest, and calculating, by the reader/writer, an eighth digest based on content of the signature, and determining, through comparison, whether the seventh digest is the same as the eighth digest; and
the determining, by the reader/writer, that the verification on the vehicle-mounted device succeeds comprises:
determining, by the reader/writer, that the fifth digest is the same as the sixth digest, and determining, by the reader/writer, that the seventh digest is the same as the eighth digest.

17. A vehicle-mounted device, comprising:
a communication unit, configured to receive and send data; and
a processing unit, configured to: receive a read request message from a reader/writer by using the communication unit, wherein the read request message is used to request to read an electronic registration identification of a motor vehicle that is stored in the vehicle-mounted device; perform verification on the reader/writer by using the read request message, and after it is determined that the verification succeeds, perform encryption processing on the electronic registration identification of the motor vehicle; and send a read response message to the reader/writer by using the communication unit, wherein the read response message comprises the encrypted electronic registration identification of the motor vehicle.

18. The vehicle-mounted device according to claim 17, wherein the processing unit is specifically configured to:
perform first encryption processing on the electronic registration identification of the motor vehicle based on a read password corresponding to a unique identity UID of the electronic registration identification of the motor vehicle, to obtain first encrypted information;
determine verification information, wherein the verification information comprises the UID; and
perform second encryption processing on the first encrypted information and the verification information by using a public key of the reader/writer.

19. The vehicle-mounted device according to claim 17 or 18, wherein the read request message comprises at least one of first location information or first time information, a first location indicated by the first location information is a location at which the reader/writer sends the read request message, and first time indicated by the first time information is time at which the reader/writer sends the read request message; and
the processing unit is specifically configured to:
determine that a distance between the first location indicated by the first location information and a location at which the vehicle-mounted device receives the read request message is less than a first distance threshold; or
determine that a time difference between the first time indicated by the first time information and time at which the vehicle-mounted device receives the read request message is less than a first time threshold.

20. The vehicle-mounted device according to claim 19, wherein the verification information further comprises at least one of the first location information or the first time information.

21. The vehicle-mounted device according to claim 18 or 19, wherein the verification information further comprises at least one of third location information or third time information, a third location indicated by the third location information is a location at which the vehicle-mounted device performs encryption processing on the electronic registration identification of the motor vehicle, and third time indicated by the third time information is time at which the vehicle-mounted device performs encryption processing on the electronic registration identification of the motor vehicle.

22. The vehicle-mounted device according to any one of claims 18 to 21, wherein the verification information further comprises a pseudonym certificate identifier of the vehicle-mounted device.

23. The vehicle-mounted device according to any one of claims 17 to 22, wherein the read response message is a message obtained after signature processing is performed based on a pseudonym certificate of the vehicle-mounted device.

24. The vehicle-mounted device according to any one of claims 19 to 23, wherein when performing verification on the reader/writer, the processing unit is specifically configured to:
determine an upper-level certificate public key of an application certificate corresponding to a signature of the read request message, perform decryption processing on the application certificate by using the upper-level certificate public key to obtain a first digest, calculate a second digest based on content of the application certificate, and determine, through comparison, whether the first digest is the same as the second digest; and
determine an upper-level public key of the signature of the read request message, perform decryption processing on the signature by using the upper-level public key to obtain a third digest, calculate a fourth digest based on content of the signature, and determine, through comparison, whether the third digest is the same as the fourth digest; and
when determining that the verification on the reader/writer succeeds, the processing unit is specifically configured to: determine that the first digest is the same as the second digest, and determine that the third digest is the same as the fourth digest.

25. A reader/writer, comprising:
a communication unit, configured to receive and send data; and
a processing unit, configured to: send a read request message by using the communication unit, wherein the read request message is used to request to read an electronic registration identification of a motor vehicle that is stored in a vehicle-mounted device, and the read request message comprises information used by the vehicle-mounted device to perform verification on the reader/writer; receive, by using the communication unit, a read response message sent by the vehicle-mounted device, wherein the read response message comprises the encrypted electronic registration identification of the motor vehicle; and perform verification on the vehicle-mounted device by using the read response message, and after determining that the verification succeeds, perform decryption processing on the encrypted electronic registration identification of the motor vehicle to obtain the electronic registration identification of the motor vehicle.

26. The reader/writer according to claim 25, wherein the processing unit is specifically configured to:
perform first decryption processing on the encrypted electronic registration identification of the motor vehicle by using a private key of the reader/writer, to obtain first encrypted information and verification information, wherein the verification information comprises a unique identity UID of the electronic registration identification of the motor vehicle; and
perform second decryption processing on the first encrypted information based on a read password corresponding to the UID, to obtain the electronic registration identification of the motor vehicle.

27. The reader/writer according to claim 25 or 26, wherein the read request message comprises at least one of first location information or first time information, a first location indicated by the first location information is a location at which the reader/writer sends the read request message, and first time indicated by the first time information is time at which the reader/writer sends the read request message.

28. The reader/writer according to claim 27, wherein the verification information further comprises at least one of second location information or second time information; and
the processing unit is further configured to:
before performing second decryption processing on the first encrypted information based on the read password corresponding to the UID, determine that a distance between a second location indicated by the second location information and the first location indicated by the first location information is less than a second distance threshold, or determine that a time difference between second time indicated by the second time information and the first time indicated by the first time information is less than a second time threshold.

29. The reader/writer according to claim 27, wherein the verification information further comprises at least one of second location information or second time information; and
the processing unit is further configured to:
before performing second decryption processing on the first encrypted information based on the read password corresponding to the UID, determine that a distance between a second location indicated by the second location information and a location at which the reader/writer performs the first decryption is less than a first distance threshold, or determine that a time difference between second time indicated by the second time information and the first time is less than a first time threshold.

30. The reader/writer according to any one of claims 26 to 29, wherein the verification information further comprises a pseudonym certificate identifier; and
the processing unit is further configured to:
before performing second decryption processing on the first encrypted information based on the read password corresponding to the UID, determine that the pseudonym certificate identifier comprised in the verification information is the same as a pseudonym certificate identifier corresponding to a signature of the read response message.

31. The reader/writer according to any one of claims 25 to 30, wherein the read request message is a message obtained after signature processing is performed based on an application certificate of the reader/writer.

32. The reader/writer according to any one of claims 25 to 31, wherein when performing verification on the vehicle-mounted device, the processing unit is specifically configured to:
determine an upper-level certificate public key of a pseudonym certificate corresponding to the signature of the read response message, perform decryption processing on the pseudonym certificate by using the upper-level certificate public key to obtain a fifth digest, calculate a sixth digest based on content of the pseudonym certificate, and determine, through comparison, whether the fifth digest is the same as the sixth digest; and
determine an upper-level public key of the signature of the read response message, perform decryption processing on the signature by using the upper-level public key to obtain a seventh digest, calculate an eighth digest based on content of the signature, and determine, through comparison, whether the seventh digest is the same as the eighth digest; and
when determining that the verification on the vehicle-mounted device succeeds, the processing unit is specifically configured to: determine that the fifth digest is the same as the sixth digest, and determine that the seventh digest is the same as the eighth digest.

33. A vehicle-mounted device, comprising: a processor and a communication interface, wherein
the processor is coupled to a memory by using the communication interface, and the processor is configured to execute program code in the memory, to implement the method according to any one of claims 1 to 8.

34. A reader/writer, comprising a processor and a communication interface, wherein
the processor is coupled to a memory by using the communication interface, and the processor is configured to execute program code in the memory, to implement the method according to any one of claims 9 to 16.

35. A computer-readable storage medium, comprising computer instructions, wherein when the computer instructions are run by a processor, a vehicle-mounted device is enabled to perform the method according to any one of claims 1 to 8.

36. A computer-readable storage medium, comprising computer instructions, wherein when the computer instructions are run by a processor, a reader/writer is enabled to perform the method according to any one of claims 9 to 16.

37. A computer program product, wherein when the computer program product is run on a processor, a vehicle-mounted device is enabled to perform the method according to any one of claims 1 to 8.

38. A computer program product, wherein when the computer program product is run on a processor, a reader/writer is enabled to perform the method according to any one of claims 9 to 16.
